# EUROPÄISCHE PATENTSCHRIFT

(11) **EP 1 256 965 B1**
(45) Veröffentlichungstag und Bekanntmachung des Hinweises auf die Patenterteilung: **01.12.2004**
(21) Anmeldenummer: 02005174.4
(22) Anmeldetag: 08.03.2002
(51) Int. Cl.: H01G 9/008, H01G 9/08

(54) **Kondensator**
Capacitor
Condensateur

(30) Priorität: 10.04.2001 DE 10117799
(43) Veröffentlichungstag der Anmeldung: 13.11.2002
(73) Patentinhaber: ROBERT BOSCH GMBH, 70442 Stuttgart (DE)
(72) Erfinder: Feiler, Wolfgang, 72766 Reutlingen (DE)

(56) Entgegenhaltungen:
- EP-A- 0 994 494
- US-A- 4 047 790
- PATENT ABSTRACTS OF JAPAN vol. 1998, no. 10, 31. August 1998 (1998-08-31) -& JP 10 135079 A (TOYOTA MOTOR CORP), 22. Mai 1998 (1998-05-22)

## Beschreibung

### Stand der Technik

Die Erfindung betrifft einen Kondensator, insbesondere einen Elektrolyt-Kondensator, mit einem Gehäuseteil, mit mindestens einem Kondensatorwickel, der zwei durch ein Dielektrikum gegeneinander isolierte Kondensatorelektroden umfasst und in dem Gehäuseteil angeordnet ist, und mit einem Gehäuseboden, der mindestens eine Durchführung für die Kontaktierung der Kondensatorelektroden aufweist und an dem äußere Anschlüsse für die Kondensatorelektroden angeordnet sind.

Derartige Kondensatoren werden in der Praxis beispielsweise als Pufferkondenstatoren in Netzteilen oder als Zwischenkreiskondensatoren eingesetzt, wo sie als Energiespeicher fungieren. Um diese Aufgabe auch bei schnell veränderlichen Signalen zu erfüllen, sollten sie eine möglichst geringe Induktivität aufweisen.

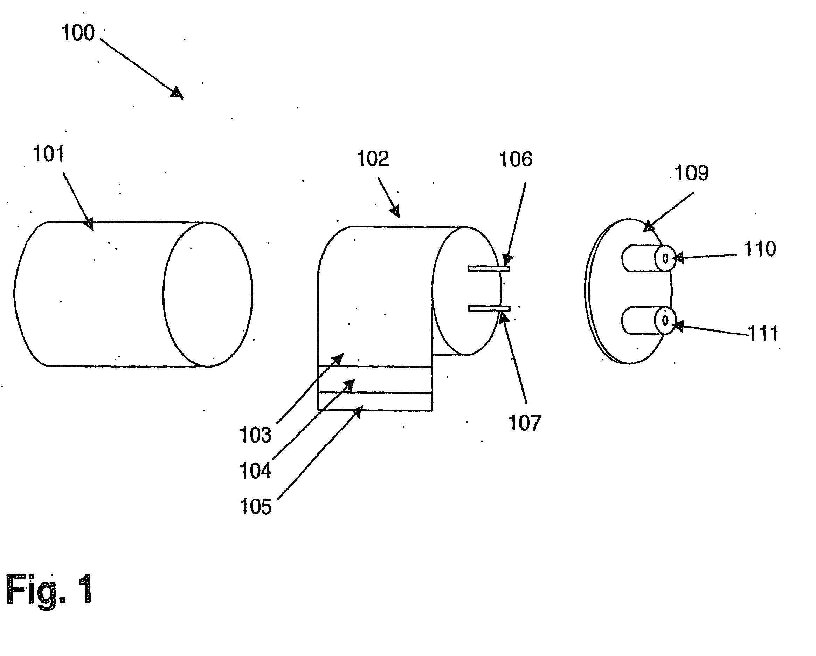

In Fig. 1 ist der Aufbau eines solchen aus dem Stand der Technik bekannten Kondensators 100 in Form einer Explosionsdarstellung wiedergegeben. Der Kondensator 100 umfasst einen Kondensatorwickel 102, der die eigentliche Kapazität bildet. Der Kondensatorwickel 102 besteht aus zwei Kondensatorelektroden 103 und 105 in Form von Metallfolien beispielsweise aus Aluminium, die gegeneinander durch ein Dielektrikum isoliert sind. Als Dielektrikum dient hier eine mit Elektrolyt getränkte Papierfolie 104. Aus diesem Grund wird der Kondensator 100 auch als Elektrolyt-Kondensator bezeichnet. Durch die gewickelte Anordnung der Schichtenfolge 103, 104, 105 lässt sich eine hohe Kapazität auf kleinstem Raum realisieren. Lediglich um dies zu verdeutlichen, ist der Kondensatorwickel 102 hier teilweise abgewickelt dargestellt. Der Kondensatorwickel 102 ist in einem becherförmigen, üblicherweise aus Metall bestehenden Gehäuseteil 101 angeordnet. Des Weiteren umfasst der Kondensator 100 einen Gehäuseboden 109 aus einem elektrisch nicht leitendem Material, an dem zwei metallische Anschlüsse 110 und 111 für den Pluspol und den Minuspol des Kondensators 100 angeordnet sind. Bei großvolumigen Kondensatoren sind diese äußeren Anschlüsse 110 und 111, wie angedeutet, mit je einem Gewinde zur Schraubbefestigung von äußeren Stromzuleitungen ausgestattet. Bei dem bekannten Kondensator 100 sind die Kondensatorelektroden 103 und 105 über kondensatorinterne Stromzuführungen 106 und 107 mit den äußeren Anschlüssen 110 und 111 verbunden.

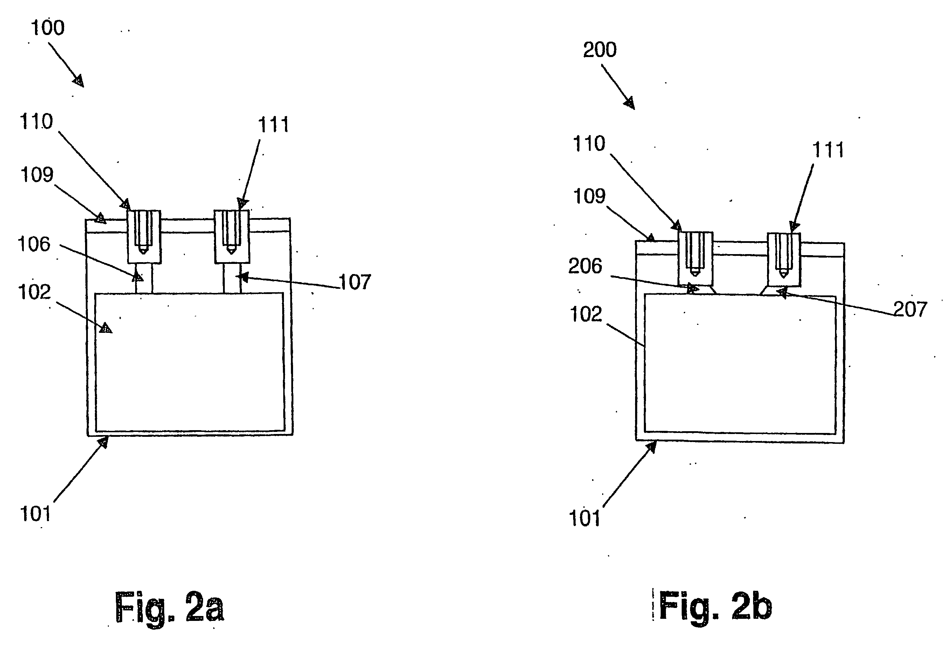

In den Figuren 2a und 2b sind zwei Varianten 100 und 200 des voranstehend anhand von Fig. 1 beschriebenen, aus dem Stand der Technik bekannten Kondensatoraufbaus als Schnittdarstellungen wiedergegeben, wobei die Schnittebenen hier jeweils durch die äußeren Anschlüsse 110 und 111 verlaufen. An dieser Stelle sei angemerkt, dass in allen Figuren gleiche Objekte mit gleichen Bezugszeichen versehen sind.

Bei der in Fig. 2a dargestellten Kondensatorvariante 100 sind die kondensatorinternen Stromzuführungen 106 und 107 eher im äußeren Bereich des Kondensatorwickels 102 angeordnet und senkrecht nach oben zu den am Gehäuseboden 109 angeordneten äußeren Anschlüssen 110 und 111 geführt. Einen maßgeblichen Beitrag zur unerwünschten Induktivität des Kondensators 100 liefern die Ausbildung und Anordnung der äußeren Anschlüsse 110 und 111 und der kondensatorintemen Stromzuleitungen 106 und 107. Deshalb wird im Stand der Technik - J. Roumen, "New Aluminium Elektrolytic Capacitors with Low Inductance Allow Advanced Frequency Converter Design", PCIM 2000 Conference Proceedings, Session PC, PC6.6 - die in Fig. 2b dargestellte Kondensatorvariante 200 vorgeschlagen. Hier wird die unerwünschte Induktivität durch eine Optimierung der internen Stromzuführungen 206 und 207 auf den Kon-. densatorwickel 102 reduziert. Die Stromzuführungen 206 und 207 sind dazu im Vergleich zu den in Fig. 2a dargestellten Stromzuführungen 106 und 107 weiter innenliegend am Kondensatorwickel 102 angeordnet und schräg nach außen zu den äußeren Anschlüssen 110 und 111 geführt.

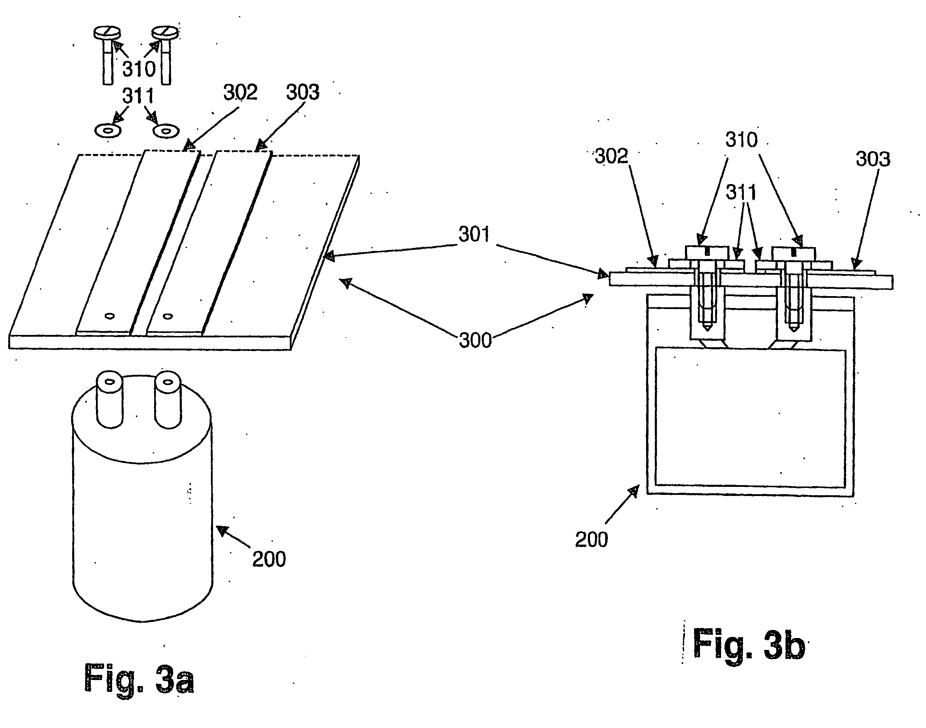

In den Figuren 3a und 3b ist der aus dem Stand der Technik bekannte Kondensator 200 vor dem Verbinden mit einer Busbarkonstruktion 300 und als Schnittdarstellung nach dem Verbinden mit der Busbarkonstruktion 300 wiedergegeben, wobei die äußeren Anschlüsse 110 und 111 des Kondensators 200 über die Busbarkonstruktion 300 kontaktiert werden. Die Busbarkonstruktion 300 umfasst zwei parallel nebeneinander auf einem elektrisch isolierenden Träger 301 angeordnete metallische Leiter 302 und 303, die die eigentlichen Busbars darstellen. Der Kondensator 200 ist mittels zweier Schrauben 310 und über zwei Scheiben 311 mit den beiden Busbars 302 und 303 elektrisch verbunden und gleichzeitig gegenüber der Busbarkonstruktion 300 mechanisch fixiert. Eine Busbarkonstruktion ist zwar hinsichtlich der durch sie verursachten zusätzlichen Induktivität nicht ideal, passt aber in der mechanischen Ausführung sehr gut zur Anschlussauslegung des Kondensators 200.

US 4 047 790 beschreibt einen Elektrolyst - Kondensator mit einem Gehäuseteil; mit einem Kondensatorwickel, der in dem Gehäuseteil angeordnet ist; und mit einem Gehäuseboden, der zwei Durchführungen für die Kontaktierung der Kondensatorelektroden aufweist, wobei an jeder Durchführung ein äußerer Anschluß für die Kondensatorelektroden angeordnet ist.

### Vorteile der Erfindung

Mit der vorliegendeh Erfindung wird ein Kondensator der eingangs genannten Art vorgeschlagen, der gegenüber den aus dem Stand der Technik bekannten Kondensatoren eine reduzierte Induktivität aufweist und der auf einfache Weise die Verwendung niederinduktiver Stromleitungszuführungen, wie z.B. Busbars, erlaubt.

Dies wird erfindungsgemäß dadurch erreicht, dass einer der beiden äußeren Anschlüsse den anderen äußeren Anschluss zumindest teilweise umgibt und dass die beiden äußeren Anschlüsse gegeneinander elektrisch isoliert sind. Durch die erfindungsgemäße Anordnung der beiden äußeren Anschlüsse des Kondensators lassen sich sowohl die Stromzuleitung von außen als auch die innere Stromzuleitung zum Kondensatorwickel mit sehr niedriger Induktivität realisieren. Außerdem ermöglicht die erfindungsgemäße Anordnung der beiden äußeren Anschlüsse eine konstruktiv einfache Stromzuleitung zum Kondensatorwickel und ein einfaches Anschließen von niederinduktiven Busbars.

Grundsätzlich gibt es verschiedene Möglichkeiten für die Ausgestaltung und Anordnung der äußeren Anschlüsse des erfindungsgemäßen Kondensators, solange der eine der beiden Anschlüsse den anderen Anschluss zumindest teilweise umgibt. Eine besonders niedrige zusätzliche Induktivität weist eine Kondensatorvariante auf, bei der die beiden Anschlüsse im wesentlichen koaxial angeordnet sind und im wesentlichen zylinderförmig ausgebildet sind. Im Rahmen der Erfindung liegen aber auch Kondensatorvarianten, deren Anschlüsse nicht koaxial ausgeführt sind, und Kondensatorvarianten, bei denen der außenliegende Anschluss den innenliegenden Anschluss nicht vollständig kreiszylinderförmig umgibt.

Im Hinblick auf die angestrebte Reduzierung der zusätzlichen Induktivität erweist es sich als vorteilhaft, wenn zumindest einer der äußeren Anschlüsse im wesentlichen koaxial mit dem Kondensatorwickel angeordnet ist. Wenn die Durchführung im Gehäuseboden ebenfalls im wesentlichen koaxial mit dem Kondensatorwickel und den äußeren Anschlüssen angeordnet ist, gestaltet sich auch die Stromzuleitung auf den Kondensatorwickel sehr einfach. Als besonders vorteilhaft in diesem Zusammenhang erweist es sich, wenn mindestens einer der äußeren Anschlüsse durch die Durchführung im Gehäuseboden in das Innere des Gehäuseteils ragt und die entsprechende Kondensatorelektrode direkt kontaktiert. In einer vorteithaften Ausgestaltung des erfindungsgemäßen Kondensators ragt zumindest der innenliegend angeordnete äußere Anschluss in das Innere des Gehäuseteils und dient so als Wickeldom. für den Kondensatorwickel.

Zur Fixierung von äußeren Stromzuleitungen können die äußern Anschlüsse des erfindungsgemäßen Kondensators mit Befestigungsmitteln versehen sein. Als Befestigungsmittel eignen sich beispielsweise Gewinde zur Schraubbefestigung der Stromzuleitungen. Bei Stromzuleitungen in Form von Busbars erweist sich diese Art der Befestigung als besonders vorteilhaft, da sich durch eine Schraubbefestigung eine Druckverbindung zwischen den Busbars und den entsprechenden äußeren Anschlüssen herstellen lässt, die einen guten elektrischen Kontakt gewährleistet.

### Zeichnungen

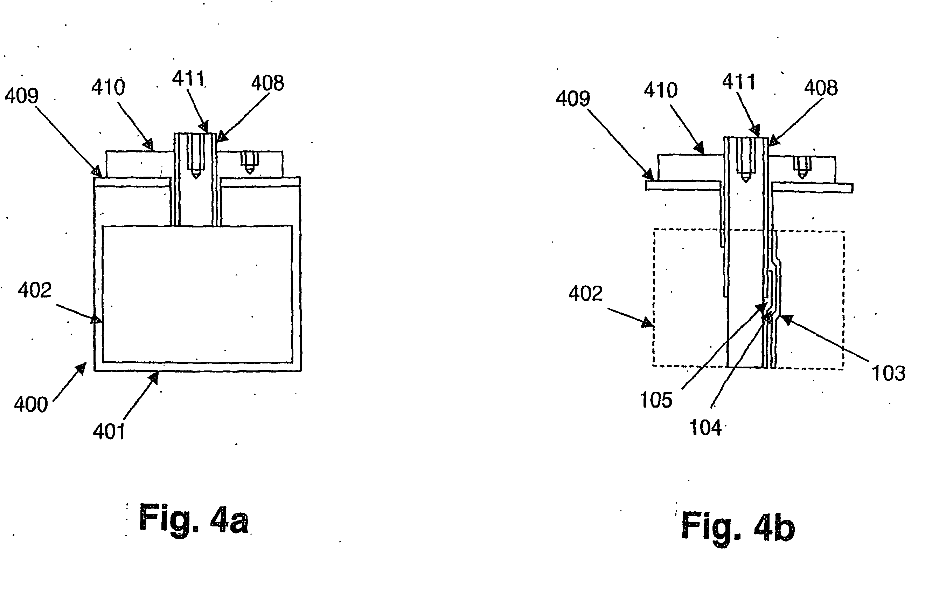

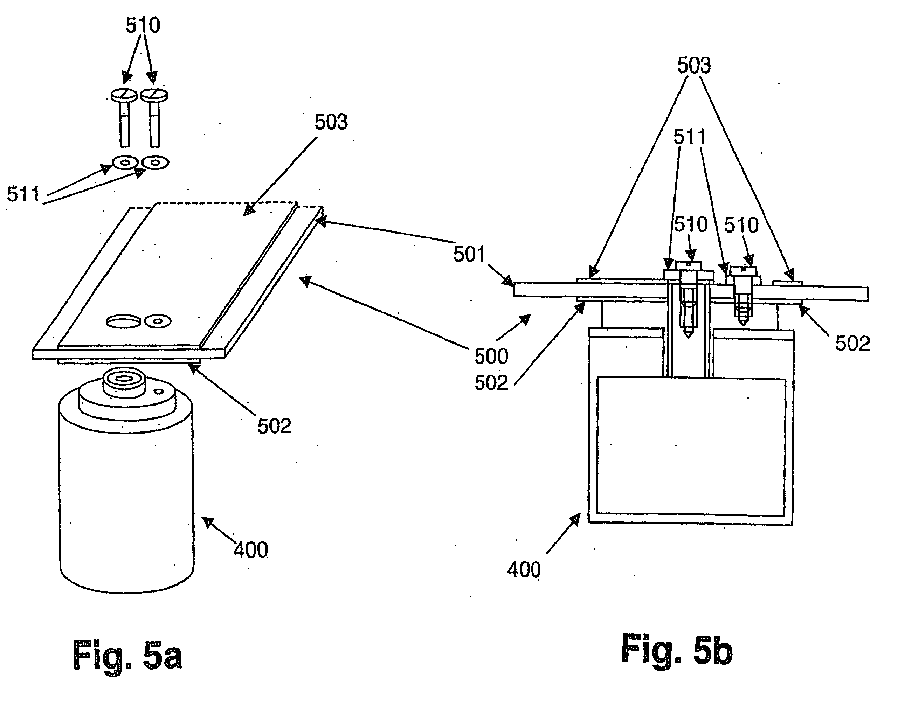

Wie bereits voranstehend ausführlich erörtert, gibt es verschiedene Möglichkeiten, die Lehre der vorliegenden Erfindung in vorteilhafter Weise auszugestalten und weiterzubilden. Dazu wird einerseits auf die dem Patentanspruch 1 nachgeordneten Patentansprüche und andererseits auf die nachfolgende Beschreibung eines Ausführungsbeispiels der Erfindung anhand der Figuren 4a und 4b sowie 5a und 5b verwiesen. Die Figuren 1, 2a und 2b sowie 3a und 3b dienen der Erläuterung des Standes der Technik, von dem die vorliegende Erfindung ausgeht und der in der Beschreibungseinleitung ausführlich erörtert worden ist.
- Fig. 1: zeigt die Explosionsdarstellung eines Elektrolyt-Kondensators gemäß dem Stand der Technik,
- Fig. 2a: zeigt eine Schnittdarstellung des in Fig. 1 dargestellten Elektrolyt-Kondensators,
- Fig. 2b: zeigt eine Schnittdarstellung eines weiteren aus dem Stand der Technik bekannten Elektrolyt-Kondensators,
- Fig. 3a: zeigt den in Fig. 2b dargestellten Elektrolyt-Kondensators vor dem Verbinden mit einer Busbarkonstruktion,
- Fig. 3b: zeigt eine Schnittdarstellung des in Fig. 3a dargestellten Elektrolyt-Kondensators nach dem Verbinden mit der Busbarkonstruktion,
- Fig. 4a: zeigt eine Schnittdarstellung eines erfindungsgemäßen Kondensa-tors,
- Fig. 4b: zeigt eine weitere Schnittdarstellung des in Fig. 4a dargestellten erfindungsgemäßen Kondensators mit der internen elektrischen Kontaktierung der Kondensatorelektroden,
- Fig. 5a: zeigt den in den Figuren 4a und 4b dargestellten erfindungsgemäßen Kondensator vor dem Verbinden mit einer Busbarkonstruktion und
- Fig. 5b: zeigt eine Schnittdarstellung des in Fig. 5a dargestellten erfindungsgemäßen Kondensators nach dem Verbinden mit der Busbarkonstruktion.

### Beschreibung des Ausführungsbeispiels

Der in Fig. 4a dargestellte Kondensator 400 umfasst einen Kondensatorwickel 402, der die eigentliche Kapazität des Kondensators 400 bildet. Der Kondensatorwickel 402 ist genauso wie der in Fig. 1 dargestellte Kondensatorwickel 102 aufgebaut und umfasst dementsprechend zwei Kondensatorelektroden in Form von Metallfolienelektroden, die durch eine mit Elektrolyt getränkte Papierfolie gegeneinander isoliert sind. Deshalb handelt es sich bei dem Kondensator 400 ebenfalls um einen Elektrolyt-Kondensator. Der Kondensatorwickel 402 ist in einem metallischen Gehäuseteil 401 angeordnet, das becherförmig mit kreisförmigem Querschnitt ausgebildet ist. Des Weiteren umfasst der Kondensator 400 einen Gehäuseboden 409 aus einem elektrisch nicht leitenden Material mit einer Durchführung zur Kontaktierung der kondensatorelektroden. Am Gehäuseboden 409 sind metallische äußeren Anschlüsse 410 und 411 angeordnet, die den Plus- und den Minuspol des Kondensators 400 bilden.

Erfindungsgemäß umgibt der Anschluss 410 den anderen Anschluss 411 zumindest teilweise, wobei die beiden Anschlüsse 410 und 411 elektrisch gegeneinander isoliert sind.

In der hier dargestellten bevorzugten Ausführungsform eines erfindungsgemäßen Kondensators sind die beiden Anschlüsse 410 und 411 jeweils im wesentlichen zylinderförmig ausgebildet und im wesentlichen koaxial angeordnet. Zwischen den beiden Anschlüssen 410 und 411 ist eine nichtleitende Isolierschicht 408, beispielsweise aus Kunststoff, angeordnet. Die beiden Anschlüsse 410 und 411 sind außerdem auch im wesentlichen koaxial mit der Durchführung im Gehäuseboden 409 und dem Kondensatorwickel 402 angeordnet.

Fig. 4b verdeutlicht, dass die beiden Kondensatorelektroden 103 und 105 im hier dargestellten Ausführungsbeispiel jeweils direkt mit dem entsprechenden Anschluss 410 bzw. 411 elektrisch verbunden sind. Dazu ragen die beiden Anschlüsse 410 und 411 durch die Durchführung im Gehäuseboden 409 in das Innere des Gehäuseteils 401. Zumindest der obere Teil des innenliegend angeordneten Anschlusses 411 dient hier außerdem auch als Wickeldorn für den Kondensatorwickel 402.

Aufgrund der Geometrie der äußeren Anschlüsse 410 und 411 und deren koaxialer Anordnung mit dazwischenliegender Isolierschicht 408 und auch aufgrund deren koaxialer Anordnung bezüglich der Durchführung im Gehäuseboden 409 und dem Kondensatorwickel 402 ist der hier dargestellte Kondensatoraufbau extrem niederinduktiv. An dieser Stelle sei jedoch darauf hingewiesen, dass beim Aufbau eines erfindungsgemäßen Kondensators generell darauf zu achten ist, dass die Stromzuführung auf den Kondensatorwickel möglichst kurz ausgeführt wird.

In den Figuren 5a und 5b ist eine Anwendung des erfindungsgemäßen Kondensators 400 in Verbindung mit einer extrem niederinduktiven Busbarkonstruktion 500 dargestellt, die im wesentlichen einen elektrisch isolierenden Träger 501 umfasst, auf dessen beiden Hauptoberflächen jeweils ein metallischer Leiter 502 und 503 angeordnet ist. Die mechanische Befestigung des Kondensators 400 an der Busbarkonstruktion 500 erfolgt maßgeblich mit Hilfe einer Schraube 510, die über eine Scheibe 511 durch die Busbarkonstruktion 500 mit einem Gewinde verschraubt wird, das im innenliegend angeordneten Anschluss 411 ausgebildet ist. Mit dieser zentralen Befestigung wird zum einen eine elektrische Durchkontaktierung der oberen Busbar 503 mit dem Anschluss 411 vorgenommen und zum anderen eine elektrische Kontaktierung der unteren Busbar 502 mit dem Anschluss 410. Die Isolierschicht 408 zwischen den Anschlüssen 410 und 411 verhindert dabei Kurzschlüsse bzw. elektrische Überschläge. Die durch die Busbarkonstruktion 500 in den außenliegenden Anschluss 410 eingeschraubte Schraube 510 dient zusammen mit der zugehörigen Scheibe 511 der weiteren mechanischen Befestigung. Sie stellt insbesondere eine Sicherung gegen ein Verdrehen und damit Lösen des Kondensators 400 von der Busbarkonstruktion 500 dar. In der oberen Busbar 503 ist eine Ausnehmung für die Scheibe 511 vorgesehen, so dass die beiden Busbars 503 und 502 durch das Verschrauben mit dem außenliegenden Anschluss 410 nicht kurzgeschlossen werden.

Zusammenfassend kann festgestellt werden, dass sich der erfindungsgemäße Kondensator extrem niederinduktiv realisieren lässt und in besonders einfacher Weise über niederinduktive, übereinander angeordneten Busbars elektrisch kontaktiert werden kann.

## Patentansprüche

1. Kondensator (400), insbesondere Elektrolyt-Kondensator,
- mit einem Gehäuseteil (401),
- mit mindestens einem Kondensatorwickel (402), der zwei durch ein Dielektrikum (104) gegeneinander isolierte Kondensatorelektroden (103, 105) umfasst und in dem Gehäuseteil (401) angeordnet ist, und
- mit einem Gehäuseboden (409), der mindestens eine Durchführung für die Kontaktierung der Kondensatorelektroden (103, 105) aufweist und an dem äußere Anschlüsse (410, 411) für die Kondensatorelektroden (103, 105) angeordnet sind,
**dadurch gekennzeichnet, dass** einer der beiden äußeren Anschlüsse (410) den anderen äußeren Anschluss (411) zumindest teilweise umgibt und dass die beiden äußeren Anschlüsse (410, 411) gegeneinander elektrisch isoliert sind.

2. Kondensator (400) nach Anspruch 1, **dadurch gekennzeichnet, dass** die beiden äußeren Anschlüsse (410, 411) im wesentlichen koaxial angeordnet sind.

3. Kondensator (400) nach einem der Ansprüche 1 oder 2, **dadurch gekennzeichnet, dass** die äußeren Anschlüsse (410, 411) im wesentlichen zylinderförmig ausgebildet sind.

4. Kondensator (400) nach einem der Ansprüche 1 bis 3, **dadurch gekennzeichnet, dass** zumindest einer der äußeren Anschlüsse (410, 411) im wesentlichen koaxial mit dem Kondensatorwickel (402) angeordnet ist.

5. Kondensator (400) nach einem der Ansprüche 1 bis 4, **dadurch gekennzeichnet, dass** die Durchführung im Gehäuseboden (409) im wesentlichen koaxial mit dem Kondensatorwickel (402) und den äußeren Anschlüssen (410, 411) angeordnet ist.

6. Kondensator (400) nach einem der Ansprüche 1 bis 5, **dadurch gekennzeichnet, dass** mindestens einer der äußeren Anschlüsse (410, 411) durch die Durchführung im Gehäuseboden (409) in das Innere des Gehäuseteils (401) ragt und die entsprechende Kondensatorelektrode (103, 105) direkt kontaktiert.

7. Kondensator (400) nach einem der Ansprüche 1 bis 6, **dadurch gekennzeichnet, dass** zumindest der innenliegend angeordnete äußere Anschluss (411) in das Innere des Gehäuseteils (401) ragt und als Wickeldom für den Kondensatorwickel (402) dient.

8. Kondensator (400) nach einem der Ansprüche 1 bis 7, **dadurch gekennzeichnet, dass** die äußeren Anschlüsse (410, 411) jeweils mit Befestigungsmitteln für äußere Stromzuleitungen versehen sind.

9. Kondensator (400) nach Anspruch 8, **dadurch gekennzeichnet, dass** die Befestigungsmittel mindestens ein Gewinde zur Schraubbefestigung der Stromzuleitungen umfassen.

10. Kondensators (400) nach einem der Ansprüche 1 bis 9, **dadurch gekennzeichnet, dass** mindestens einer der äußeren Anschlüsse (410, 411) über Busbars (502, 503) elektrisch kontaktierbar ist.

## Claims

1. Capacitor (400), in particular an electrolytic capacitor,
- having a housing part (401),
- having at least one capacitor winding (402) which comprises two capacitor electrodes (103, 105) (which are isolated from one another by a dielectric (104)) and is arranged in the housing part (401), and
- having a housing base (409) which has at least one aperture for making contact with the capacitor electrodes (103, 105), and on which outer connections (410, 411) for the capacitor electrodes (103, 105) are arranged,
**characterized in that** one of the two outer connections (410) at least partially surrounds the other outer connection (411), and **in that** the two outer connections (410, 411) are electrically isolated from one another.

2. Capacitor (400) according to Claim 1, **characterized in that** the two outer connections (410, 411) are arranged essentially coaxially.

3. Capacitor (400) according to one of Claims 1 or 2, **characterized in that** the outer connections (410, 411) are essentially cylindrical.

4. Capacitor (400) according to one of Claims 1 to 3, **characterized in that** at least one of the outer connections (410, 411) is arranged essentially coaxially with the capacitor winding (402).

5. Capacitor (400) according to one of Claims 1 to 4, **characterized in that** the aperture in the housing base (409) is arranged essentially coaxially with the capacitor winding (402) and the outer connections (410, 411).

6. Capacitor (400) according to one of Claims 1 to 5, **characterized in that** at least one of the outer connections (410, 411) projects through the aperture in the housing base (409) into the interior of the housing part (401), and makes direct contact with the corresponding capacitor electrode (103, 105).

7. Capacitor (400) according to one of Claims 1 to 6, **characterized in that** at least the outer connection (411) which is arranged on the inside projects into the interior of the housing part (401), and is used as a winding former for the capacitor winding (402).

8. Capacitor (400) according to one of Claims 1 to 7, **characterized in that** the outer connections (410, 411) are each provided with attachment means for external power supply lines.

9. Capacitor (400) according to Claim 8, **characterized in that** the attachment means comprise at least one thread for screw attachment of the power supply lines.

10. Capacitor (400) according to one of Claims 1 to 9, **characterized in that** electrical contact can be made with at least one of the outer connections (410, 411) via busbars (502, 503).

## Revendications

1. Condensateur (400), notamment condensateur à électrolyte, comprenant
- un boîtier (401),
- au moins un enroulement de condensateur (402) comprenant deux électrodes de condensateur (103, 105) isolées l'une par rapport à l'autre par un diélectrique (104) et logé dans le boîtier (401) et
- un fond de boîtier (409) ayant au moins un passage pour la mise en contact des électrodes de condensateur (103, 105) et comportant des bornes extérieures (410, 411) pour les électrodes de condensateur (103, 105),
**caractérisé en ce que**
l'une des bornes extérieures (410) entoure au moins en partie l'autre borne extérieure (411) et
les deux bornes extérieures (410, 411) sont isolées électriquement l'une par rapport à l'autre.

2. Condensateur (400) selon la revendication 1,
**caractérisé en ce que**
les deux bornes extérieures (410, 411) sont essentiellement coaxiales.

3. Condensateur (400) selon l'une des revendications 1 ou 2,
**caractérisé en ce que**
les bornes extérieures (410, 411) sont essentiellement cylindriques.

4. Condensateur (400) selon l'une des revendications 1 à 3,
**caractérisé en ce qu'**
au moins l'une des bornes extérieures (410, 411) est installée d'une manière essentiellement coaxiale par rapport à l'enroulement de condensateur (402).

5. Condensateur (400) selon l'une des revendications 1 à 4,
**caractérisé en ce que**
la traversée du fond de boîtier (409) se fait d'une manière essentiellement coaxiale avec l'enroulement de condensateur (402) et les bornes extérieures (410, 411).

6. Condensateur (400) selon l'une des revendications 1 à 5,
**caractérisé en ce qu'**
au moins l'une des bornes extérieures (410, 411) traverse le passage du fond de boîtier (409) pour arriver à l'intérieur du boîtier (401) et vient directement en contact avec l'électrode de condensateur (103, 105) correspondante.

7. Condensateur (400) selon l'une des revendications 1 à 6,
**caractérisé en ce qu'**
au moins la borne extérieure (411), prévue du côté intérieur, pénètre à l'intérieur du boîtier (401) et sert de broche d'enroulement pour l'enroulement constituant le condensateur (402).

8. Condensateur (400) selon l'une des revendications 1 à 7,
**caractérisé en ce que**
les bornes extérieures (410, 411) sont munies chacune de moyens de fixation pour des lignes électriques extérieures.

9. Condensateur (400) selon la revendication 8,
**caractérisé en ce que**
les moyens de fixation comprennent au moins un filetage pour visser les lignes d'alimentation électrique.

10. Condensateur (400) selon l'une des revendications 1 à 9,
**caractérisé en ce qu'**
au moins l'une des bornes extérieures (410, 411) est mise en contact électrique par des barres de bus (502, 503).
